# EUROPEAN PATENT APPLICATION

(11) **EP 3 682 738 A1**
(43) Date of publication of application: **22.07.2020**
(21) Application number: 20000012.3
(22) Date of filing: 14.01.2020
(51) Int. Cl.: A01N 25/04, A01P 1/00, A01P 3/00, A01P 15/00

(54) **METHOD OF PROTECTING A NEW FACADE AGAINST MICROBIOLOGICAL CONTAMINATION AND RENOVATION METHOD OF MICROBIOLOGICALLY CONTAMINATED FACADE OF A BUILDING**

(30) Priority: 16.01.2019 PL 42860419
(71) Applicant: Bolix S.A., 34-300 Zywiec (PL)
(72) Inventor: Gaciek, Pawel, 34-382 Wieprz (PL); Szafran, Krzysztof, 32-590 Libiaz (PL); Bak, Slawomir, 34-322 Gilowice (PL)
(74) Representative: Tabor-Kmiecik, Katarzyna

(57) **Abstract**

Both invention methods - protection of a new facade against microbiological contamination and renovation of already contaminated facade, for priming of cleaned ground, prior to final application of a protective paint coating with higher resistance to microbiological contamination, use a product containing coating biocides classified as class 2, group 7, in a total amount of 0.9 to 1.7% by weight.

## Description

The subjects of the invention are as follows: method of protecting a new facade against microbiological contamination and renovation method of microbiologically contaminated facade understood as an area of habitat of mold fungi, algae (algae and cyanobacteria), mosses and lichen.

Moisture, areas hidden from sunlight, favorable temperature as well as the vicinity of trees and bushes are the catalysts of growth of microbiological contamination on facades. Microbiologically contaminated surfaces impair the appearance of facades and are distinguished by stains on the surface, cause degradation of plasters and other external coverings. Biological corrosion often occurs on facades of buildings insulated with light wet method, seamless thermal insulation system and the External Thermal Insulation Composite System (ETICS). On the surfaces of top layers of insulation, especially in shaded areas, moisture is condensed from air and the development of biological corrosion comes easier when plaster coatings are used based on resin-organic seams, especially acrylic seams.

The method of preventive resistance of new facades to microbiological contamination is known; it involves painting a primed base surface with paints with coating biocides, which - as biocidal products - counteract inhabitation and growth of microorganisms on wall surfaces.

For renovating a building with the facade surface under microbiological contamination, before taking the said steps, the surface of facade with already grown mold fungi, algae (algae and cyanobacteria), mosses and lichen is cleaned by first washing off dirt and microbiological contamination with water and applying a biocidal product upon drying and rewashing the surface with water. Only after preparing the base surface in this way, it is primed and the paint with biocides is applied just as for preventive maintenance of facade.

Both methods of this invention -the preventive resistance to microbiological contamination of a new facade and renovation of a building with the facade under microbiological contamination - stand out among the known and above described methods with the fact that priming of the base surface is performed with a product containing coating biocides of class 2 and group 7 in the total amount of 0.9 to 1.7% by weight. Priming of a clean plaster surface or surface cleared from microorganisms causes that in addition to strengthening and limiting the absorbing capacity
of the base surface before painting, the additional amount of coating biocides is introduced to the primed plaster base surface, which stored in the base surface structure support counteracting of microorganisms by additives of the surface paint with increased resistance to microbiological contamination. Paint coating of 160-200 mµ is much thinner than a layer of thin plaster of 1 to 4 mm, which means that the amount of biocide agents in the paint which can be collected is much smaller than the amount present in the plaster. Biocide action is to penetrate the cellular membrane and penetrate the inside of a cell with the quantity that ensures toxic effect to the biological organism. Negative effects of alkali to biocides in the base surface washed out by rain and UV radiation cause a decreasing biocidal capacity of the surface paint. The invention solution causes slow release of biocide from the base surface primed by the paint coating, which allows for maintaining accumulated concentration for effective counteracting of growth of unwanted organisms. While a building is used, coating biocides introduced with a primer into the existing plaster migrate towards and penetrate through the coating of the surface paint,thus strengthening and extending the resistance of the surface to any microbiological contamination.

In accordance with Directive 98/8/EC considering environmental risks, biocides - as substances or mixtures containing an active substance used to prevent, destroy and neutralize harmful organisms other than by purely chemical or mechanical activities - prior to marketing in the European Union and Poland are subject to registration at the Office for Registration of Medicinal Products, Medical Devices and Biocidal Products. The list of registered biocidal products is available on the Office's website. Products of class 1 in group 2 and class 2 in groups 6, 7, 8 and 10 are to be used to protect facades.

The invention is illustrated by a description of two sample protection means and renovation of facade conducted with the use of primer with biocides.

### Example 1.

In the newly erected building, the facade was provided with ETICS insulation technology. Thin-layered plaster was applied on the thermal insulating layer adhered to the bearing wall made of EPS polystyrene boards covered by a reinforcement layer from the mortar and fiber glass mesh. The mortar plaster as dried was soaked with a brush or roll with a primer composed in accordance with the invention by added biocide Rocima 350 Biocide of 0.5% by weight and biocide known as Polyphase 864 CR of 0.85% by weight, which was a total of 1.35% of biocides in the primer.

### Example 2.

The facade of a building used for 8 years with walls insulated with ETICS had visible green-brown spots reflecting the growth of microorganisms. Invention effectiveness trials were performed using products of BOLIX S.A. available on the market. Contaminated surfaces of the façade were cleaned off algae and fungi with a pressure washer and subsequently with a brush or a roll, corroded surfaces were soaked with a biocidal product BOLIX GLO Complex and rewashed with water as dried. In the next step, a base surface made of thin-layered plaster was soaked with a primer with composition enriched with biocides like Rocima 350 Biocide and Polyphase 864 CR in the quantities as in Example 1. The primed base surface was left to dry for about 10 hours and finally covered with a facade silicone paint BOLIX SIL Complex with increased resistance to microorganic contamination.

The effectiveness of protection against microbiological contamination as per the invention was tested on two samples A and B, identical in terms of hydrophobic features, made from the same materials, of the same porosity and the same temperature conditions, water flush and UV radiation. Sample A was treated as above with a primer enriched with biocides Rocima 350 Biocide and Polyphase 864 CR whereas sample B was primed with a primer without adding these biocides. Time upon which concentration of the biocide agent in the top layer, assumed to be yet effective protection against microbiological contamination - was found to be 1.7 times longer for sample A than for sample B. The result confirmed the efficiency of biocides added to the primer into the plaster layer before painting.

## Claims

1. Method of protecting against the appearance of microbiological contamination on the new building facade which involves priming the base surface and applying a protective paint coating with higher microbiological resistance **characterized in that** priming is performed with a product containing coating biocides classified as class 2,group 7, in a total quantity of 0.9 to 1.7% by weight.

2. The renovation method of a building facade under microbiological contamination consisting of preliminary washing of dirt and microbiological contamination, applying a biocidal agent on a dry ground and rewashing the surface with water, priming with a primer, and making a protective paint coating with higher microbiological resistance **characterized in that** priming is performed with a product containing coating biocides classified as class 2, group 7, in a total quantity of 0.9 to 1.7% by weight.
